# EUROPÄISCHE PATENTSCHRIFT

(11) **EP 0 690 753 B1**
(45) Veröffentlichungstag und Bekanntmachung des Hinweises auf die Patenterteilung: **18.12.1996**
(21) Anmeldenummer: 94911069.6
(22) Anmeldetag: 18.03.1994
(51) Int. Cl.: B21C 47/26, B23D 31/00

(54) **VORRICHTUNG ZUM ZERTEILEN VON DRAHTWINDUNGEN**
WIRE WINDING SEVERING DEVICE
DISPOSITIF DE SECTIONNEMENT DE SPIRES DE FIL

(30) Priorität: 25.03.1993 DE 4309694
(43) Veröffentlichungstag der Anmeldung: 10.01.1996
(73) Patentinhaber: SKET Schwermaschinenbau Magdeburg GmbH, D-39100 Magdeburg (DE)
(72) Erfinder: PECHAU, Gerhard, D-39118 Magdeburg (DE); WIANKOW, Sven, D-39124 Magdeburg (DE)
(74) Vertreter: Röhnicke, Heinz
(86) Internationale Anmeldenummer: DE9400329
(87) Internationale Veröffentlichungsnummer: WO9421400

(56) Entgegenhaltungen:
- AT-A- 376 610
- DE-A- 2 928 497
- DE-C- 2 917 305
- FR-A- 1 579 968

## Beschreibung

Die Erfindung betrifft eine Vorrichtung zum Zerteilen von Drahtwindungen, welche auf einem Windungstransporteur eines Drahtwalzwerkes von einer Windungslage abgetrennt sind, in mehrere Abschnitte in einem Drahtwalzwerk.

Es ist bekannt, daß bei der Herstellung von Draht in Warmwalzwerken die nicht toleranzhaltigen und qualitätsgerechten vorderen und hinteren Drahtwindungen, auch als Schrottwindungen bezeichnet, von den weiterverwendbaren Gutaderwindungen abgetrennt und aus dem Herstellungsprozeß ausgeschieden werden.

Durch die DD 149 318 ist es bekannt, daß die Drahtwindungen waagerecht auf einen Windungstransporteur transportiert werden und das Abtrennen der Schrottwindungen während dieses Transportes erfolgt.

In dem Windungstransporteur ist eine Klappe angeordnet, die nach dem Abtrennen geöffnet ist. Die Schrottwindungen kippen dann über eine Umfangsrolle in die entstandene Öffnung ab und fallen nach unten in einen Schrottkübel. Ein weiteres Zerteilen derselben erfolgt nicht. Derartige Schrottwindungen liegen sehr sperrig und sind im Stahlwerk schlecht chargierbar.

Durch die DE 29 17 305 C2 ist es bekannt, daß die Windungen der Windungspakete schraubengangförmig um ein Führungselement gelegt sowie parallel zu deren Längserstreckung transportiert werden und daß die Ausschußwindungen des Vorder- und diejenigen des Hinterabschnittes jeweils fortlaufend und jeweils mehrfach in der Weise zerteilt werden, daß sie durch Herabfallen von dem Führungselement abgeführt werden. Die Trenneinrichtung besteht dabei aus mehreren Trenneinheiten mit im Bereich der Oberfläche des Führungselementes umlaufenden Schneidrädern, denen jeweils ein während des Schnittvorgangs stillstehendes Gegenmesser zugeordnet ist. Diese Lösung ist jedoch sehr aufwendig und auch störanfällig.

Der Erfindung liegt die Aufgabe zugrunde, eine Vorrichtung zum Zerteilen von Drahtwindungen, welche auf einem Windungstransporteur eines Drahtwalzwerkes von einer Windungslage abgetrennt sind, in mehrere Abschnitte zu schaffen, wobei das Zerteilen ohne technologische Beeinflussung des Transportes der Gutaderwindungen zum Sammelschacht erfolgt.

Erfindungsgemäß wird die Aufgabe dadurch gelöst, daß ein den Windungstransporteur mit einer die Drahtwindungen zerteilenden Schrottschere verbindender Walzgut-Zuführkanal angeordnet ist, wobei die Schrottschere ein an diesem anliegendes Gehäuseunterteil aufweist und dabei die den Transport der Drahtwindungen in die Schrottschere dienenden Flächen beider Bauteile in einer Ebene liegen, welche in einem vorbestimmten Winkel zu einer horizontalen Bezugsebene nach oben in Richtung des Windungstransporteurs geneigt sind, wobei das Gehäuseunterteil ein in dieser Ebene liegendes Messertrageelement aufweist, an dem mehrere, im Bereich des Durchmessers der zu zerteilenden Drahtwindungen liegende Untermesser angeordnet sind und daß die Schrottschere weiterhin ein Gehäuseoberteil aufweist, welches auf der dem Walzgut-Zuführkanal um eine quer zu dessen verlängerter mittlerer Längsachse angeordneten Schwenkachse in die Ebene des Gehäuseunterteils und aus dieser heraus schwenkbar gelagert ist, wobei das Gehäuseoberteil mit einem oberen Messertrageelement versehen ist, an dem Obermesser angeordnet sind, von denen jedes einem der Untermesser zugeordnet ist und mit diesen ein Schneidpaar bildet und daß die Schrottschere einen mit dem Gehäuseoberteil verbundenen und dieses gegen das Gehäuseunterteil verschwenkenden Linearantrieb aufweist, der an dem oberen Abschnitt eines Ständers angeordnet ist, wobei an dem unteren Abschnitt des Ständers das feststehende Gehäuseunterteil und das von der Schwenkachse schwenkbare Gehäuseoberteil angeordnet sind.

Durch die erfinderische Lösung wird erreicht, daß die von einer Windungslage abgetrennten Drahtwindungen, vorzugsweise die vorderen und hinteren Drahtwindungen, die aus nicht toleranzhaltigen und qualitätsgerechten Drahtadern bestehen, von dem Windungstransporteur genommen und außerhalb desselben in Abschnitte gewünschter Größe zerteilt werden.

Vorzugsweise sind an dem walzgut-Zuführkanal diesen seitlich begrenzende Zentrierbleche sowie in dessen vorderem Abschnitt ein Stopper angeordnet, der bei geöffneter Stellung der Schrottschere in Offenstellung und in Schneidstellung derselben in Schließstellung ist. Dadurch sind eine gute Führung der Drahtwindungen zur Schrottschere sowie eine störungsfreie Zuführung gewährleistet.

In bevorzugter Ausführung der Erfindung ist das untere Messertrageelement als ein vierarmiges, rechteckiges Kreuz ausgebildet, von dem zwei Kreuzarme auf der verlängerten mittleren Längsachse des Walzgut-Zuführkanals und die beiden anderen Kreuzarme um 90° versetzt zu diesem angeordnet sind, wobei an jedem Kreuzarm ein Untermesser befestigt ist.

Eine aufeinanderfolgende Schnittfolge bei den an den waagerechten Kreuzarmen angeordneten Untermessern kann erreicht werden, wenn die Untermesser jeweils auf verschiedenen Seiten der sich in eine Richtung erstreckenden Kreuzarme angeordnet sind.

Eine weitere mögliche Ausführungsform besteht darin, daß das untere Messertrageelement in bezug auf die verlängerte mittlere Längsachse des Walzgut-Zuführkanals in Form eines Andreaskreuzes angeordnet ist, wobei an jedem Kreuzarm ein Untermesser befestigt ist.

Um die Drahtwindungen auch in mehr als vier Abschnitte zu unterteilen, kann das untere Messertrageelement mehr als vier, jeweils ein Untermesser tragende, Arme aufweisen, die auf dem Umfang der zu zerteilenden Drahtwindungen in einem annähernd gleichen Abstand zueinander angeordnet sind. Zweckmäßigerweise weist das Gehäuseunterteil im Bereich des Messertrageelementes eine Öffnung auf, die größer als die zu zerteilenden Drahtwindungen ist, wobei diese vor dem Zerteilen auf den Armen des Messertrageelementes aufliegen und in ihrer Lage durch Anschläge fixiert sind, welche auf der dem Walzgut-Zuführkanal gegenüberliegenden Seite des Gehäuseunterteils angeordnet sind.

Um ein Sammeln der einzelnen Abschnitte der zerteilten Drahtwindungen zu erreichen, ist es vorteilhaft, wenn im Bereich der Öffnung mehrere, nach unten weisende Leitbleche angeordnet sind, wobei unterhalb der Öffnung eine Grube mit einem darin befindlichen Schrottkübel zur Aufnahme der zerteilten Drahtwindungen angeordnet ist.

In weiterer Ausbildung der Erfindung ist der Linearantrieb als ein Hydraulikantrieb ausgebildet, dessen Hydraulikzylinder an dem Ständer und der Kolben über eine Kolbenstange an dem Gehäuseoberteil in dessen mittlerem Bereich angeordnet sind.

Eine bevorzugte Ausführungsform ist es, wenn der Ständer aus einem oder mehreren Trägern, die vertikal zu der horizontalen Bezugsebene angeordnet sind, und einem oder mehreren Trägern, die vertikal zu dem Gehäuseunterteil angeordnet sind, besteht, wobei die Träger im oberen Abschnitt des Ständers miteinander verbunden sind.

Hierbei können bei mehreren Trägern diese durch eine Traverse im oberen Abschnitt des Ständers untereinander verbunden sein.

Es ist weiterhin möglich, daß der Walzgut-Zuführkanal fest mit dem Gehäuseunterteil der Schrottschere, einen Teil derselben bildend, verbunden ist.

In einem Ausführungsbeispiel wird die Erfindung näher erläutert. In der zugehörigen Zeichnung zeigen:
Fig. 1 die Vorderansicht der Vorrichtung
Fig. 2 den Schnitt A-A nach Fig. 1

Die Vorrichtung weist einen seitlich durch Zentrierbleche 11 begrenzten walzgut-Zuführkanal 1 auf. Er ist zwischen einem Windungstransporteur einer nicht dargestellten Drahtwalzstraße und einer Schrottschere I angeordnet und dient zur Zuführung von zu zerteilenden Drahtwindungen 14 zu dieser. In dem vorderen, der Schrottschere I zugewandten Bereich des Walzgut-Zuführkanals 1 ist beweglich ein Stopper 10 angeordnet. Der Walzgut-Zuführkanal 1 kann dabei selbst Teil der Schrottschere I sein.

Die Schrottschere I weist ein an dem Walzgut-Zuführkanal 1 anliegendes Gehäuseunterteil 2 auf. Die zum Transport der Drahtwindungen 14 dienenden Flächen beider Bauteile liegen in einer Ebene. Diese Ebene ist in einem Winkel α zu einer horizontalen Bezugsebene 19 nach oben geneigt. Damit ist es möglich, daß die Drahtwindungen 14 von dem oberhalb der Schrottschere I angeordneten Windungstransporteur in diese gleiten können. Der Winkel α muß dabei bei einem Schwerkrafttransport größer als der Winkel der Selbsthemmung infolge der Reibung zwischen den Drahtwindungen 14 und ihrer Gleitebene sein. Bei einem Transport mittels einer Fördereinrichtung kann er sehr klein gehalten sein.

Das Gehäuseunterteil 2' weist ein unteres Messertrageelement 12 auf. Dieses ist vorzugsweise als ein vierarmiges, rechteckiges Kreuz ausgebildet, von dem zwei Kreuzarme auf der verlängerten mittleren Längsachse 17 des Walzgut-Zuführungskanals 1 und die beiden anderen Arme entsprechend um 90° versetzt zu dieser angeordnet sind. An jedem Arm ist jeweils im Bereich des Durchmessers der zu zerteilenden Drahtwindung 14 ein Untermesser 8 angeordnet. Es sind somit vier Untermesser 8 vorgesehen.

Es ist aber auch möglich, das untere Messertrageelement 12 in anderer Form auszubilden, beispielsweise in Form eines Andreaskreuzes in bezug auf die Längsachse des Walzgut-Zuführkanals 1 oder auch mit mehr als vier Armen und damit einer entsprechend größeren Anzahl von Untermessern 8.

Im Bereich des unteren Messertragelementes 12 weist das Gehäuseunterteil 2' eine Öffnung 15 auf, die größer als der Durchmesser der zu zerteilenden Drahtwindungen 14 ist, so daß die zerteilten Abschnitte derselben nach unten fallen können. Zur Fixierung der Lage der Drahtwindungen 14 in der Schrottschere I sind auf der dem Walzgut-Zuführkanal 1 abgewandten Seite an dem Gehäuseunterteil 2' Anschläge 9 angeordnet. An der Unterseite des Gehäuseunterteils 2' sind im Bereich der Öffnung 15 mehrere Leitbleche 5 zur Führung der nach unten fallenden Teile der Drahtwindungen 14 vorgesehen.

Die Schrottschere I weist weiterhin ein Gehäuseoberteil 2'' auf. Dieses ist im Bereich seines hinteren Endes auf der dem Walzgut-Zuführkanal 1 abgewandten Seite um eine quer zu dessen verlängerter mittlerer Längsachse angeordneter Schwenkachse 18 gelagert. Um diese ist das Gehäuseoberteil 2'' in die Ebene des Gehäuseunterteils 2' und aus dieser heraus schwenkbar. Das Gehäuseoberteil 2'' weist ein oberes Messertrageelement 13 mit an diesem angeordneten Obermessern 7 auf. Die Ober- und Untermesser 7; 8 sind paarweise einander zugeordnet, wodurch sie in Schnittstellung in Wirkverbindung stehen.

Die Schrottschere I weist weiterhin einen Linearantrieb 3 auf, der das bewegliche Gehäuseoberteil 2'' gegen das feststehende Gehäuseunterteil 2' verschwenkt. Der Linearantrieb 3 ist an einem Ständer 6 angeordnet, der vertikal zu der horizontalen Bezugsebene 19 angeordnet ist.

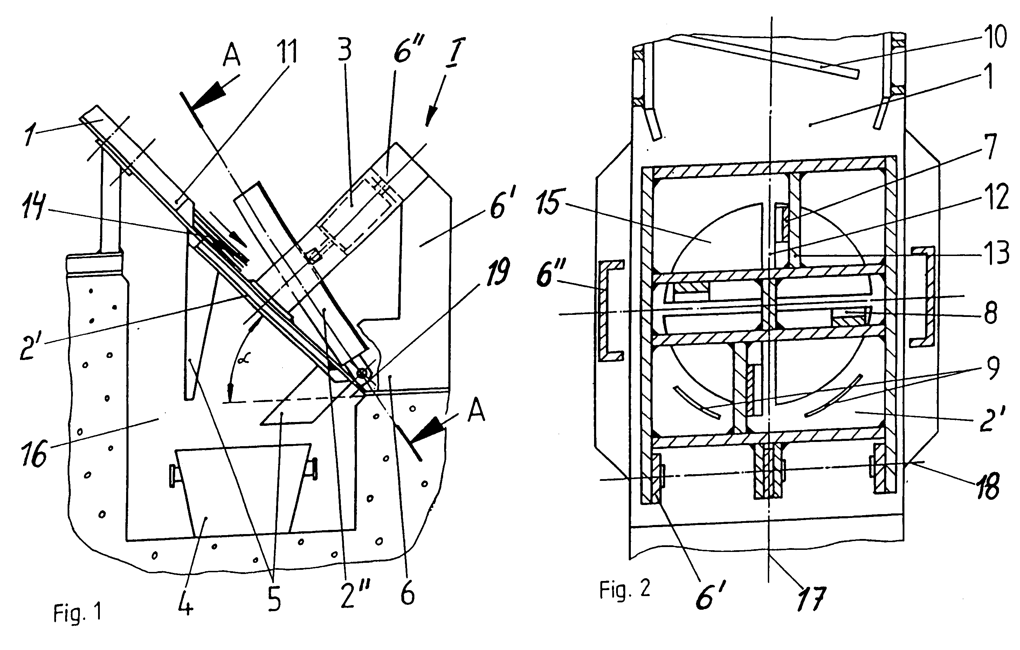

An dem unteren Abschnitt des Ständers 6 sind in der vorstehend beschriebenen Weise das schwenkbare Gehäuseoberteil 2'' gelagert und das feststehende Gehäuseunterteil 2' angeordnet. Der Ständer 6 kann unterschiedlich aufgebaut sein. Wie in Fig. 2 dargestellt, weist er bei diesem Ausführungsbeispiel drei vertikale Träger 6' auf, welche gemäß Fig. 1 durch eine Traverse an ihrem oberen Ende miteinander verbunden sind. Das feststehende Gehäuseunterteil 2' ist mit dem Ständer 6 über vertikal auf diesem an seinen beiden Längsseiten angeordnete Träger 6'' verbunden.

Damit weist die Schrottschere I einen Festigkeitsverband auf, der ein mehrfaches Zertrennen von übereinanderliegenden Drahtwindungen 14 ermöglicht.

Der Linearantrieb 3 ist vorzugsweise als ein Hydraulikantrieb ausgebildet, wobei der Hydraulikzylinder fest an dem Ständer 6, vorzugsweise an dessen Traverse, und der Kolben mit einer Kolbenstange an dem Gehäuseoberteil 2'' angeordnet sind.

Der Linearantrieb 3 ist dabei annähernd im mittleren Bereich des Gehäuseoberteils 2'' mit diesem verbunden.

Die Vorrichtung weist unterhalb der schrottschere I eine Grube 16 auf, in der ein transportabler Schrottkübel 4 zur Aufnahme der zerschnittenen Drahtwindungen 14 steht.

Bei der Herstellung von Draht in Warmwalzwerken ist es erforderlich, die nicht toleranzhaltigen und qualitätsgerechten vorderen und hinteren Drahtwindungen 14, auch als Schrottwindungen bezeichnet, von den Gutaderwindungen abzuschneiden, zu zerteilen und dem Schrott zuzuführen. Diese Drahtwindungen 14 werden in nicht dargestellter Weise auf einem Windungstransporteur zusammengeschoben und dann über den Walzgut-Zuführkanal 1 der Schrottschere I zugeführt. Dabei ist die Zuführung nur möglich, wenn die Schrottschere I eine Offenstellung (Fig. 1) einnimmt. Bei geschlossener Stellung derselben hält der Stopper 10 die Drahtwindungen 14 in dem Walzgut-Zuführkanal 1 zurück.

Bei der Offenstellung gleiten die Drahtwindungen 14 auf dem Gehäuseunterteil 2' in die Schrottschere I. In dieser legen sie sich an die Anschläge 9 an, wobei sie gleichzeitig auf den Untermessern 8 aufliegen. Das Gehäuseoberteil 2'' wird mittels des Linearantriebes 3 nach unten verschoben und schwenkt dabei um die Schwenkachse 18. Hierdurch wird erreicht, daß die Drahtwindungen 14 an den einzelnen Schnittstellen zu unterschiedlichen Zeitpunkten abgeschert werden. Damit wird der für das Zerteilen der Drahtwindungen 14 in mehrere Bogenteile gleichzeitig erforderliche Kraftaufwand verringert. Dieser gleichzeitige Kraftaufwand kann dadurch verringert werden, daß die beiden im mittleren Bereich in einer horizontalen Ebene liegenden Paare von Ober- und Untermessern 7; 8, wie in Fig. 2 dargestellt, gegeneinander versetzt angeordnet sind. Nach dem Zerteilen fallen die einzelnen Bogenabschnitte der Drahtwindungen 14, durch die Leitbleche 5 geführt, in den Schrottkübel 4. Da lediglich Viertelkreise oder noch kleinere Teile in Abhängigkeit von der Anzahl der zum Einsatz kommenden Paare von Ober- und Untermessern 7; 8 sich in diesem sammeln, ist es möglich, eine größere Masse in diesem aufzunehmen als bei dem Sammeln ganzer Drahtwindungen 14.

## Patentansprüche

1. Vorrichtung zum Zerteilen von Drahtwindungen, welche auf einem Windungstransporteur eines Drahtwalzwerkes von einer Windungslage abgetrennt sind, in mehrere Abschnitte, dadurch gekennzeichnet, daß ein den Windungstransporteur mit einer die Drahtwindungen (14) zerteilenden Schrottschere (I) verbindender Walzgut-Zuführkanal (1) angeordnet ist, wobei die Schrottschere (I) ein an diesem anliegendes Gehäuseunterteil (2') aufweist und dabei die dem Transport der Drahtwindungen (14) in die Schrottschere (I) dienenden Flächen beider Bauteile in einer Ebene liegen, welche in einem vorbestimmten Winkel ( α ) zu einer horizontalen Bezugsebene (19) nach oben in Richtung des Windungstransporteurs geneigt sind, wobei das Gehäuseunterteil (2') ein in dieser Ebene liegendes Messertrageelement (12) aufweist, an dem mehrere im Bereich des Durchmessers der zu zerteilenden Drahtwindungen (14) liegende Untermesser (8) angeordnet sind und daß die Schrottschere (I) weiterhin ein Gehäuseoberteil (2'') aufweist, welches auf der dem Walzgut-Zuführkanal (1) um eine quer zu dessen verlängerter mittlerer Längsachse (17) angeordneter Schwenkachse (18) in die Ebene des Gehäuseunterteils (2') und aus dieser heraus schwenkbar gelagert ist, wobei das Gehäuseoberteil (2'') mit einem oberen Messertrageelement (13) versehen ist, an dem Obermesser (7) angeordnet sind, von denen jedes einem der Untermesser (8) zugeordnet ist und mit diesem ein Schneidpaar bildet und daß die Schrottschere (I) einen mit dem Gehäuseoberteil (2'') verbundenen und dieses gegen das Gehäuseunterteil (2') verschwenkenden Linearantrieb (3) aufweist, der an dem oberen Abschnitt eines Ständers (6) angeordnet ist, wobei an dem unteren Abschnitt des Ständers (6) das feststehende Gehäuseunterteil (2') und das um die Schwenkachse (18) schwenkbare Gehäuseoberteil (2'') angeordnet sind.

2. Vorrichtung nach Anspruch 1, dadurch gekennzeichnet, daß an dem Walzgut-Zuführkanal (1) diesen seitlich begrenzende Zentrierbleche (11) sowie in dessen vorderem Abschnitt ein Stopper (10) angeordnet sind, der bei geöffneter Stellung der Schrottschere (I) in Offenstellung und in Schneidstellung derselben in Schließstellung ist.

3. Vorrichtung nach Anspruch 1, dadurch gekennzeichnet, daß das untere Messertrageelement (12) als ein vierarmiges, rechteckiges Kreuz ausgebildet ist, von dem zwei Kreuzarme auf der verlängerten mittleren Längsachse (17) des Walzgut-Zuführkanals (1) und die beiden anderen Kreuzarme um 90° versetzt zu dieser angeordnet sind, wobei an jedem Kreuzarm ein Untermesser (8) befestigt ist.

4. Vorrichtung nach Anspruch 3, dadurch gekennzeichnet, daß das Untermesser (8) jeweils auf verschiedenen Seiten der sich in einer Richtung erstreckenden Kreuzarme angeordnet ist.

5. Vorrichtung nach Anspruch 1, dadurch gekennzeichnet, daß das untere Messertrageelement (12) in bezug auf die verlängerte mittlere Längsachse (17) des Walzgut-Zuführkanals (1) in Form eines Andreaskreuzes angeordnet ist, wobei an jedem Kreuzarm ein Untermesser (8) befestigt ist.

6. Vorrichtung nach Anspruch 1, dadurch gekennzeichnet, daß das untere Messertrageelement (12) mehr als vier, jeweils ein Untermesser (8) tragende, Arme aufweist, die auf dem Umfang der zu zerteilenden Drahtwindungen (14) in einem annähernd gleichen Abstand zueinander angeordnet sind.

7. Vorrichtung nach Anspruch 1 bis 6, dadurch gekennzeichnet, daß das Gehäuseunterteil (2') im Bereich des Messertrageelementes (12) eine Öffnung (15) aufweist, die größer als die zu zerteilenden Drahtwindungen (14) ist, wobei diese vor dem Zerteilen auf den Armen des Messertrageelementes (12) aufliegen und in ihrer Lage durch Anschläge (9) fixiert sind, welche auf der dem Walzgut-Zuführkanal (1) gegenüberliegenden Seite des Gehäuseunterteils (2') angeordnet sind.

8. Vorrichtung nach Anspruch 7, dadurch gekennzeichnet, daß im Bereich der Öffnung (15) mehrere, nach unten weisende Leitbleche (5) angeordnet sind, wobei unterhalb der Öffnung (15) eine Grube (16) mit einem darin befindlichen Schrottkübel (4) zur Aufnahme der zerteilten Drahtwindungen (14) angeordnet ist.

9. Vorrichtung nach Anspruch 1, dadurch gekennzeichnet, daß der Linearantrieb (3) als ein Hydraulikantrieb ausgebildet ist, dessen Hydraulikzylinder an dem Ständer (6) und der Kolben über eine Kolbenstange an dem Gehäuseoberteil (2'') in dessen mittleren Bereich angeordnet sind.

10. Vorrichtung nach Anspruch 1 bis 9, dadurch gekennzeichnet, daß der Ständer (6) aus einem oder mehreren Trägern (6'), die vertikal zu der horizontalen Bezugsebene (19) angeordnet sind, und einem oder mehreren Trägern (6''), die vertikal zu dem Gehäuseunterteil (2') angeordnet sind, besteht, wobei die Träger (6'; 6'') im oberen Abschnitt des Ständers (6) miteinander verbunden sind.

11. Vorrichtung nach Anspruch 10, dadurch gekennzeichnet, daß bei mehreren Trägern (6'; 6'') diese durch eine Traverse im oberen Abschnitt des Ständers (6) untereinander verbunden sind.

12. Vorrichtung nach Anspruch 1 bis 11, dadurch gekennzeichnet, daß der Walzgut-Zuführkanal (1) fest mit dem Gehäuseunterteil (2') der Schrottschere (I), einen Teil derselben bildend, verbunden ist.

## Claims

1. Device for severing wire windings, which are cut off from a winding layer on a winding transporter of a wire rolling mill, into a plurality of sections, characterized in that a rolled-material feed channel (1) is arranged which connects the winding transporter to a scrap cutter (I) severing the wire windings (14), the scrap cutter (I) having a bottom housing part (2') bearing against the rolled-material feed channel (1) and in the process the surfaces of both components which serve to transport the wire windings (14) into the scrap cutter (I) lying in one plane, which is inclined upwards at a predetermined angle (α) to a horizontal reference plane (19) in the direction of the winding transporter, the bottom housing part (2') having a blade-carrying element (12) which lies in this plane and on which a plurality of bottom blades (8) lying in the area of the diameter of the wire windings (14) to be severed are arranged, and in that, furthermore, the scrap cutter (I) has a top housing part (2'') which is mounted so as to be pivotable into and out of the plane of the bottom housing part (2') on the side remote from the rolled-material feed channel (1) about a pivot axis (18) arranged transversely to the extended centre longitudinal axis (17) of the rolled-material feed channel (1), the top housing part (2'') being provided with a top blade-carrying element (13) on which top blades (7) are arranged, of which each is allocated to one of the bottom blades (8) and forms a cutting pair with the latter, and in that the scrap cutter (I) has a linear drive (3) which is connected to the top housing part (2''), pivots the latter towards the bottom housing part (2') and is arranged on the top section of a column (6), the fixed bottom housing part (2') and the top housing part (2'') pivotable about the pivot axis (18) being arranged on the bottom section of the column (6).

2. Device according to Claim 1, characterized in that centring plates (11) are arranged on the rolled-material feed channel (1), which centring plates (11) laterally bound the latter, and a stopper (10) is arranged in its front section, which stopper (10) is in the open position when the scrap cutter (I) is in the open position and is in the closed position when the scrap cutter (I) is in the cutting position.

3. Device according to Claim 1, characterized in that the bottom blade-carrying element (12) is designed as a four-arm, rectangular cross, of which two cross arms are arranged on the extended centre longitudinal axis (17) of the rolled-material feed channel (1) and the other two cross arms are arranged at 90° to the longitudinal axis (17), a bottom blade (8) being fastened to each cross arm.

4. Device according to Claim 3, characterized in that the bottom blade (8) is in each case arranged on different sides of the cross arms extending in one direction.

5. Device according to Claim 1, characterized in that the bottom blade-carrying element (12) is arranged in the form of a St. Andrew's cross with respect to the extended centre longitudinal axis (17) of the rolled-material feed channel (1), a bottom blade (8) being fastened to each cross arm.

6. Device according to Claim 1, characterized in that the bottom blade-carrying element (12) has more than four arms which in each case carry a bottom blade (8) and are arranged at approximately the same distance from one another at the periphery of the wire windings (14) to be severed.

7. Device according to Claims 1 to 6, characterized in that the bottom housing part (2') has an opening (15) in the area of the blade-carrying element (12), which opening (15) is larger than the wire windings (14) to be severed, the latter resting on the arms of the blade-carrying element (12) before the severing and being fixed in their position by stops (9) which are arranged on the side of the bottom housing part (2') opposite the rolled-material feed channel (1).

8. Device according to Claim 7, characterized in that a plurality of guide plates (5) pointing downwards are arranged in the area of the opening (15), a pit (16) with a scrap bucket (4) located therein for receiving the severed wire windings (14) being arranged below the opening (15).

9. Device according to Claim 1, characterized in that the linear drive (3) is designed as a hydraulic drive, the hydraulic cylinder of which is arranged on the column (6), and the piston is arranged via a piston rod on the top housing part (2'') in its centre area.

10. Device according to Claims 1 to 9, characterized in that the column (6) comprises one or more supports (6') arranged vertically to the horizontal reference plane (19) and one or more supports (6'') arranged vertically to the bottom housing part (2'), the supports (6'; 6'') being connected to one another in the top section of the column (6).

11. Device according to Claim 10, characterized in that, in the case of a plurality of supports (6'; 6''), these supports (6'; 6'') are connected to one another by a cross-piece in the top section of the column (6).

12. Device according to Claims 1 to 11, characterized in that the rolled-material feed channel (1), in forming part of the scrap cutter (I), is firmly connected to the bottom housing part (2') of the scrap cutter (I).

## Revendications

1. Dispositif de sectionnement de spires de fil, lesquelles sont séparées en plusieurs sections à partir d'une couche de spires sur un convoyeur de spires d'un train à fils, caractérisé par le fait que l'un des convoyeurs de spires est muni de ciseaux à déchets (I) sectionnant les spires de fil (14) et reliant le conduit d'amenée des matières laminées (1), les ciseaux à déchets (I) présentant une partie inférieure de boîtier (2') reposant sur celui-ci et les surfaces des deux éléments servant au transport des spires de fil (14) dans les ciseaux à déchets (I) se trouvant dans un plan, lequel est incliné vers le haut en direction du convoyeur de spires selon un angle (α) prédéfini par rapport à un plan de référence horizontal (19), la partie inférieure du boîtier (2') présentant un élément porte-lames (12) se trouvant dans ce plan et sur lequel sont disposées plusieurs lames inférieures (8) dans la zone du diamètre des spires de fil (14) à sectionner, et que les ciseaux à déchets (I) présentent également une partie supérieure de boîtier (2''), laquelle est logée sur le conduit d'amenée des matières laminées (1) selon un axe de pivotement (18) transversal par rapport à l'axe longitudinal (17) central prolongé de celui-ci dans le plan de la partie inférieure du boîtier (2') et de façon à pouvoir pivoter hors de celui-ci, la partie supérieure du boîtier (2'') étant munie d'un porte-lames supérieur (13), sur lequel sont disposées des lames supérieures (7), chacune d'entre elles étant affectée à l'une des lames inférieures (8) et forme avec celle-ci une paire de lames, et que les ciseaux à déchets (I) présentent un entraînement linéaire (3) relié à la partie supérieure du boîtier (2'') et pouvant balayer horizontalement celle-ci contre la partié inférieure du boîtier (2'), ledit entraînement linéaire (3) étant disposé sur la section supérieure d'un montant (6), la partie inférieure (2') fixe du boîtier et la partie supérieure (2'') du boîtier pouvant être pivotée autour de l'axe de pivotement (18) étant disposées sur la section inférieure du montant (6).

2. Dispositif selon la revendication 1, caractérisé par le fait que des tôles de centrage (11) sont disposées sur le conduit d'amenée des matières laminées (1) en délimitant latéralement celui-ci ainsi qu'un arrêt (10) dans la section avant de celui-ci, laquelle est en position ouverte lorsque les ciseaux à déchets (I) sont en position ouverte et en position fermée lorsque ceux-ci se trouvent en position de coupe.

3. Dispositif selon la revendication 1, caractérisé par le fait que l'élément porte-lames inférieur (12) est réalisé sous la forme d'une croix rectangulaire à quatre branches, deux branches de la croix sont disposées sur l'axe longitudinal (17) central prolongé du conduite d'amenée des matières laminées (1) et les deux autres branches de la croix sont décalées de 90° par rapport à celui-ci, une lame inférieure (8) étant fixée sur chaque branche de la croix.

4. Dispositif selon la revendication 3, caractérisé par le fait que la lame inférieure (8) est à chaque fois disposée sur des côtés différents de la branche de la croix s'étendant dans une direction.

5. Dispositif selon la revendication 1, caractérisé par le fait que l'élément porte-lames inférieur (12) est disposé sous la forme d'une croix de Saint-André par rapport à l'axe longitudinal (17) central prolongé du conduit d'amenée des matières laminées (1), une lame inférieure (8) étant fixée sur chaque branche de la croix.

6. Dispositif selon la revendication 1, caractérisé par le fait que l'élément porte-lames inférieur (12) présente plus de quatre branches portant chacune une lame inférieure (8), lesquelles sont disposées sur la périphérie des spires de fil (14) à sectionner selon un écartement approximativement égal l'une par rapport à l'autre.

7. Dispositif selon les revendications 1 à 6, caractérisé par le fait que la partie inférieure du boîtier (2') présente un orifice (15) dans la zone de l'élément porte-lames (12), lequel est supérieur aux spires de fil (14) à sectionner, celles-ci reposant sur les branches de l'élément porte-lames (12) avant d'être sectionnées et étant fixées dans leur position par des butées (9), lesquelles sont disposées sur le côté de la partie inférieure du boîtier (2') qui est opposé au conduit d'amenée des matières laminées (1).

8. Dispositif selon la revendication 7, caractérisé par le fait que plusieurs tôles de guidage (5) orientées vers le bas sont disposées dans la zone de l'orifice (15), une fosse (16) contenant une benne à déchets (4) destinée à recevoir les spires de fil (14) sectionnées étant disposée sous l'orifice (15).

9. Dispositif selon la revendication 1, caractérisé par le fait que l'entraînement linéaire (3) est réalisé sous la forme d'un entraînement hydraulique dont les vérins hydrauliques sont disposés sur le montant (6) et les pistons sont disposés dans la zone centrale de la partie supérieure du boîtier (2'') par le biais d'une tige de piston sur celui-ci.

10. Dispositif selon les revendications 1 à 9, caractérisé par le fait que le montant (6) est composé d'un ou de plusieurs supports (6'), lesquels sont disposés verticalement par rapport au plan de référence horizontal (19), et d'un ou de plusieurs supports (6'') qui sont disposés verticalement par rapport à la partie inférieure du boîtier (2'), les supports (6'; 6'') étant reliés entre eux dans la section supérieure du montant (6).

11. Dispositif selon la revendication 10, caractérisé par le fait que dans le cas de plusieurs supports (6'; 6''), ceux-ci sont reliés entre eux par le biais d'une traverse dans la partie supérieure du montant (6).

12. Dispositif selon les revendications 1 à 11, caractérisé par le fait que le conduit d'amenée des matières laminées (1) est relié à demeure avec la partie inférieure du boîtier (2') des ciseaux à déchets (I) en formant une partie de ceux-ci.
